# EUROPEAN PATENT APPLICATION

(11) **EP 2 897 191 A1**
(43) Date of publication of application: **22.07.2015**
(21) Application number: 13836659.6
(22) Date of filing: 11.09.2013
(51) Int. Cl.: H01M 2/04, H01M 2/08

(54) **SECONDARY BATTERY CASE PROVIDED WITH FASTENING STRENGTHENING UNIT**

(30) Priority: 11.09.2012 KR 20120100333; 11.09.2012 KR 20120100335
(71) Applicant: Routejade Inc., Chungcheongnam-do 320-844 (KR)
(72) Inventor: KIM, Kyung Joon, Incheon 407-070 (KR); KIM, In Joong, Nonsan-si Chungcheongnam-do 320-755 (KR); JUNG, Young Ho, Gyeryong-si Chungcheongnam-do 321-763 (KR)
(74) Representative: Von Kreisler Selting Werner - Partnerschaft von Patentanwälten und Rechtsanwälten mbB
(86) International application number: PCT/KR2013/008201
(87) International publication number: WO 2014/042417

(57) **Abstract**

A case for a secondary battery according to the present invention to achieve the above-described object includes: a can which includes a lower plate and an upward side wall extended upwardly from the lower plate so as to form an inner space with an open top; and a cap which includes an upper plate and a downward side wall extended downwardly from the upper plate so as to form an inner space with an open bottom, and isolates the inner space of the can from the outside by inserting a lower end of the downward side wall into the inner space of the can so as to be mounted on an upper surface of the lower plate, wherein a reinforced connection unit in which a section of the downward side wall is wrapped with a section of the upward side wall is included in order to improve a connection force and a sealing property when the can and the cap are connected. The case for a secondary battery according to the present invention enables a reduction in product size due to simplication of a combination structure between a can and a cap, an improvement in connection force and sealing property between a can and a cap, and an improvement in conductivity with respect to an electrode assembly.

## Description

### [Technical Field]

The present invention relates to a case for a secondary battery including a can and a cap, and more particularly, to a case for a secondary battery by which a connection force and a sealing property between a can and a cap can be improved and conductivity with respect to an electrode assembly can be improved.

### [Background Art]

Typically, unlike non-rechargeable primary batteries, secondary batteries can be charged and discharged. Recently, a high power secondary battery with high energy density using a non-aqueous electrolyte solution has been developed. A low capacity battery in which a single battery cell is packaged into a pack shape has been used in small portable electronic devices such as cellular phones, notebook computers, and camcorders, while a high capacity secondary battery in which several tens of battery cells are connected in series or in parallel has been used in devices requiring a high power, for example, a power source for driving motors in an electric automobile.

The secondary batteries have been manufactured in various shapes. Representatively, there is a cylinder-shaped secondary battery including an electrode group (or a jelly roll) formed by winding tape-shaped cathode plate and anode plate and a separator which is an insulator interposed therebetween in a vortex shape, and a stack-shaped secondary battery in which multiple cathode plates, anode plates, and separators are alternately laminated or stacked to form an electrode assembly and the electrode assembly is installed within a case.

The case is typcially manufactured into a metal plate such that a strength higher than a standard value, and includes a can into which an electrolyte solutoin and an electrode aseembly are inserted and a cap configured to cover and seal an inlet of the can. While a lithium ion secodary battery is used, the electrolyte solution may often leak from a contact portion between the can and the cap due to an increase in internal pressure caused by gas generation. The leakage of the electrolyte solution itself has a devastating effect on the performance of the battery, and what is worse, an electronic circuit of an electronic device in which the battery is used can be contaminated, resulting in reduction in life cycle of the costly electronic device. Therefore, the can and the cap are combined with each other so as to be completely sealed.

Hereinafter, referring to the accompanying drawings, a conventional case for a secondary battery will be described in detail.

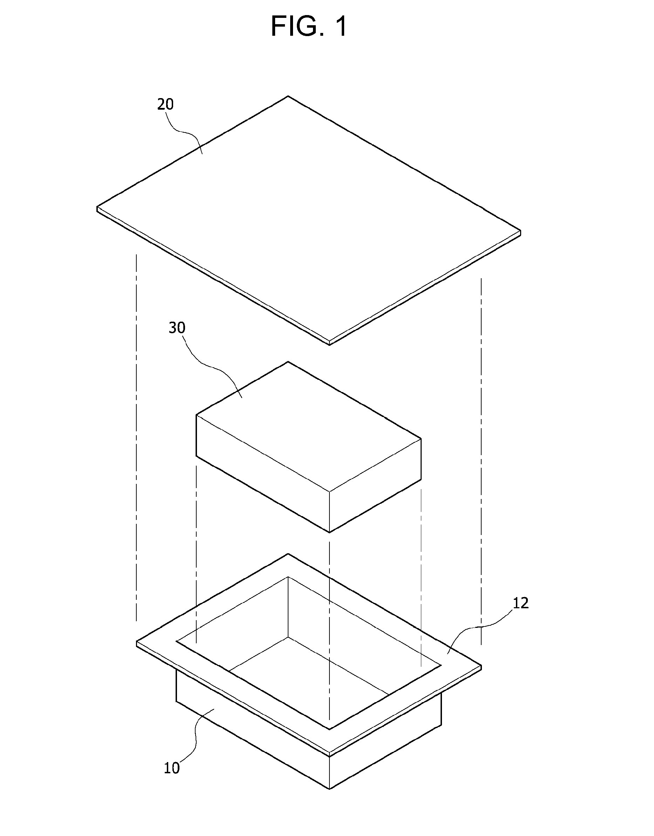

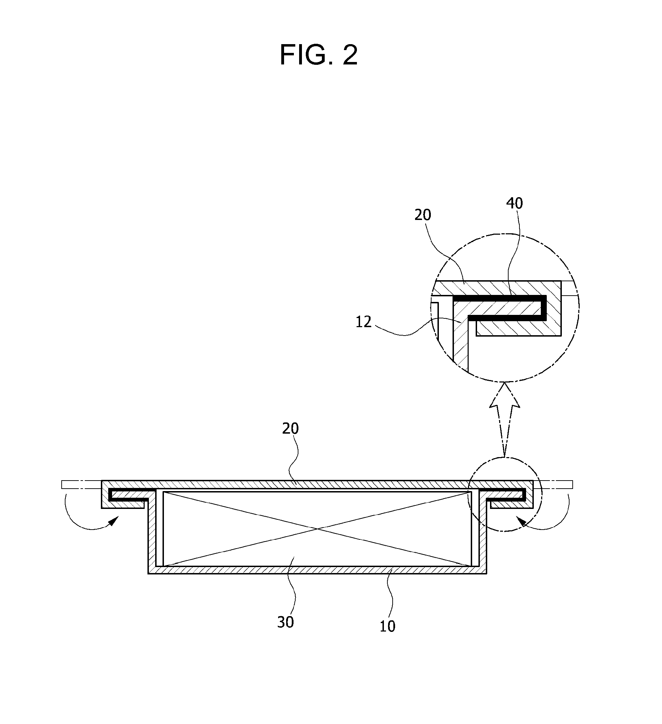

FIG. 1 is an exploded perspective view of a conventional case for a secondary battery, and FIG. 2 is a cross-sectional view of the conventional case for a secondary battery.

As illustrated in FIG. 1, the conventional case for a secondary battery includes a can 10 which is formed into a dented shape with an open top and includes a flange 12 at an upper entrance, a cap 20 which is mounted so as to cover the upper entrance and the flange 12 of the can 10 and of which a peripheral end is combined so as to wrap the flange 12, and an electrode assembly 30 which is inserted into an inner space formed by the can 10 and the cap 20. Herein, the inner space into which the electrode assembly 30 is inserted is filled with an electrolyte solution, and a gasket 40 is inserted into a contact portion between the can 10 and the cap 20 in order for the electrolyte solution not to be discharged to the outside.

However, in the conventional case for a secondary battery configured as described above, when the cap 20 is upwardly raised according to an increase in inner pressure, the top surface of the flange 12 and the bottom surface of the cap 20 are spaced apart from each ther, and, thus, there is the possibility of leakage of the inner electrolyte solution and the gas within the case to the outside. If a length of the flange 12 is increased or the flange 12 wrapped by the periphery of the cap 20 is further bented, the possiblity of leakage of the the electrolyte solution and the gas may be reduced. However, if the length of the flange 12 is increased, the size of the whole secondary battery is increased, and in order to bend the flange 12, a separate process is additionally needed.

### [Disclosure]

### [Technical Problem]

The present invention is suggested to solve the above-described problem, and an object of the present invention is to provide a case for a secondary battery which enables a reduction in product size due to simplication of a combination structure between a can and a cap, an improvement in connection force and sealing property between a can and a cap, and an improvement in conductivity with respect to an electrode assembly.

### [Technical Solution]

According to an exemplary embodiment of the present invention to achieve the above-described object, there is provided a case for a secondary battery including: a can which includes a lower plate and an upward side wall extended upwardly from the lower plate so as to form an inner space with an open top; and a cap which includes an upper plate and a downward side wall extended downwardly from the upper plate so as to form an inner space with an open bottom, and isolates the inner space of the can from the outside by inserting a lower end of the downward side wall into the inner space of the can so as to be mounted on an upper surface of the lower plate, wherein a reinforced connection unit in which a section of the downward side wall is wrapped with a section of the upward side wall may be included in order to improve a connection force and a sealing property when the can and the cap are connected.

The reinforced connection unit may be a bent part which is formed at the upward side wall and of which an upper portion is bent to cover the upper plate in whole or in part.

The bent part may apply a downward pressure to the upper plate so as to compress the lower end of the downward side wall onto the lower plate.

An end of the bent part in a longitudinal direction may be positioned to be closer to a vertical center of the cap than an inner surface of the downward side wall.

The upper plate may include a dent portion which is downwardly dented and applies a downward pressure to the electrode assembly when the bent part applies a downward pressure to the upper plate.

A side wall of the dent portion may be formed slantly in a direction closer to a vertical center line of the dent portion toward the bottom.

A gasket which is inserted into a portion where the can and the cap are overlapped with each other so as to seal between the can and the cap may be further included.

The gasket may be prepared from between the lower end of the downward side wall and the upper surface of the lower plate to between a bottom surface of the bent part and an upper surface of the upper plate.

The downward side wall may be arranged to be perpendicular to the lower plate, and the bent part may be configured to apply a pressure to the downward side wall in a direction perpendicular to the lower plate.

The reinforced connection unit may include a connection sill which is formed at the downward side wall of the cap and extended to the outside and then downwardly extended and a bent part which is formed at the upward side wall of the can and bent so as to be mounted on an upper surface of the connection sill.

The connection sill may be formed at a middle end of the downward side wall, and the upward side wall may further include an extension portion which is upwardly extended from an end of the bent part and brought into close contact with the downward side wall.

The bent part may be formed at an upper end of the upper side wall, and a height of a peak of the bent part mounted on the upper surface of the connection sill may be equal to or lower than a height of an upper surface of the upper plate.

An upper surface of the bent part and the upper surface of the upper plate may form a plane surface.

The downward side wall may include two or more connection sills in a vertical direction, and the upward side wall may include two or more bent parts in a vertical direction, so that different bent parts may be respectively mounted on the two or more connection sills.

The bent part may be bent so as to apply a downward pressure to the connection sill, so that the lower end of the downward side wall may be compressed onto the lower plate.

The end of the bent part may be positioned to be closer to a vertical center of the cap than an inner surface of the downward side wall positioned under the connection sill.

The upper plate may include a dent portion which is downwardly dented and applies a downward pressure to the electrode assembly when a downward pressure is applied to the upper plate by bending of the upward side wall.

A side wall of the dent portion may be formed slantly in a direction closer to a vertical center line of the dent portion toward the bottom.

A gasket which is inserted between the upward side wall and the downward side wall and between the downward side wall and the lower plate so as to seal between the can and the cap may be further included.

### [Advantageous Effects]

A case for a secondary battery according to the present invention enables a reduction in product size due to simplication of a combination structure between a can and a cap, an improvement in connection force and sealing property between a can and a cap, and an improvement in conductivity with respect to an electrode assembly.

### [Description of Drawings]

FIG. 1 is an exploded perspective view of a conventional case for a secondary battery;
FIG. 2 is a cross-sectional view of the conventional case for a secondary battery;
FIG. 3 is an exploded perspective view of a first exemplary embodiment of a case for a secondary battery according to the present invention;
FIG. 4 is a perspective view illustrating a shape of an upturned cap included in the first exemplary embodiment of the case for a secondary battery according to the present invention;
FIG. 5 and FIG. 6 are cross-sectional views illustrating in sequence a process of combining a can and a cap of the first exemplary embodiment;
FIG. 7 is a partial cross-sectional view illustrating a combination structure of the can and the cap of the first exemplary embodiment;
FIG. 8 is a cross-sectional view of a case for a secondary battery according to the present invention illustrating a connection structure of an cathode plate and an anode plate according to the first exemplary embodiment of the case for a secondary battery according to the present invention;
FIG. 9 is a cross-sectional view of a second exemplary embodiment of the case for a secondary battery according to the present invention;
FIG. 10 is an exploded perspective view of a third exemplary embodiment of the case for a secondary battery according to the present invention;
FIG. 11 is an exploded perspective view of a fourth exemplary embodiment of the case for a secondary battery according to the present invention;
FIG. 12 and FIG. 13 are cross-sectional views illustrating in sequence a process of combining a can and a cap of the fourth exemplary embodiment;
FIG. 14 is a partial cross-sectional view illustrating a combination structure of the can and the cap of the fourth exemplary embodiment;
FIG. 15 is a cross-sectional view of a fifth exemplary embodiment of the case for a secondary battery according to the present invention;
FIG. 16 is a cross-sectional view of a sixth exemplary embodiment of the case for a secondary battery according to the present invention; and
FIG. 17 is an exploded perspective view of a seventh exemplary embodiment of the case for a secondary battery according to the present invention.

### [Best Mode]

Hereinafter, exemplary embodiments of a case for a secondary battery according to the present invention will be described in detail with reference to the accompanying drawings.

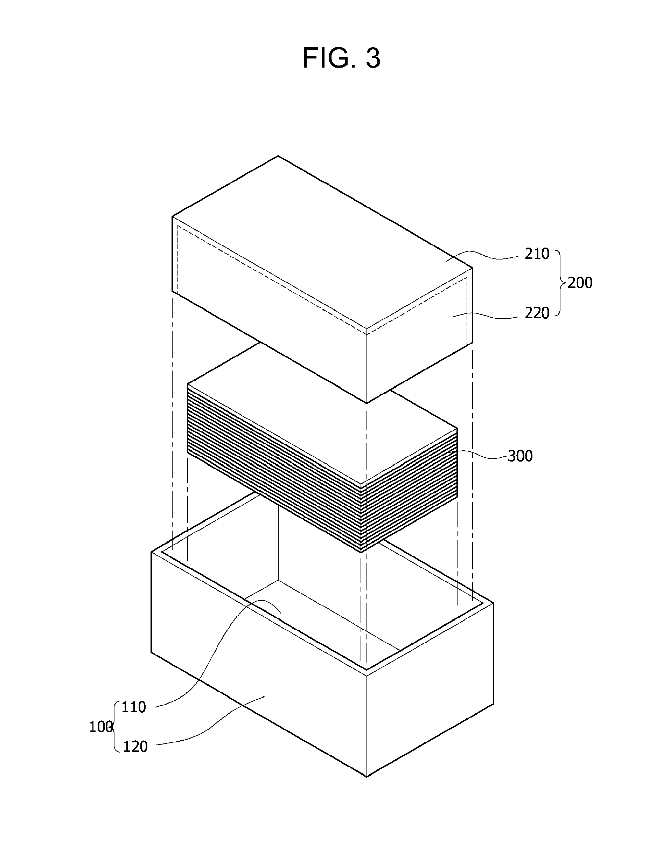

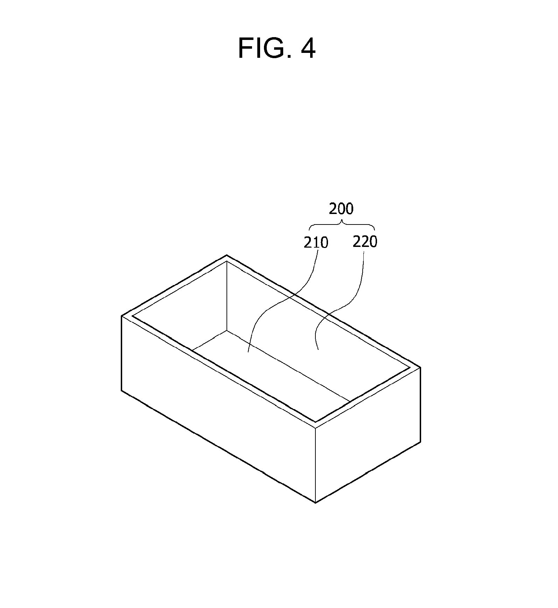

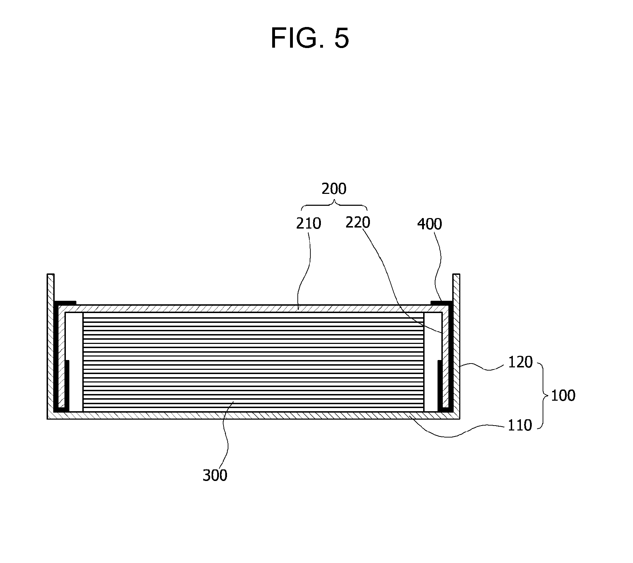

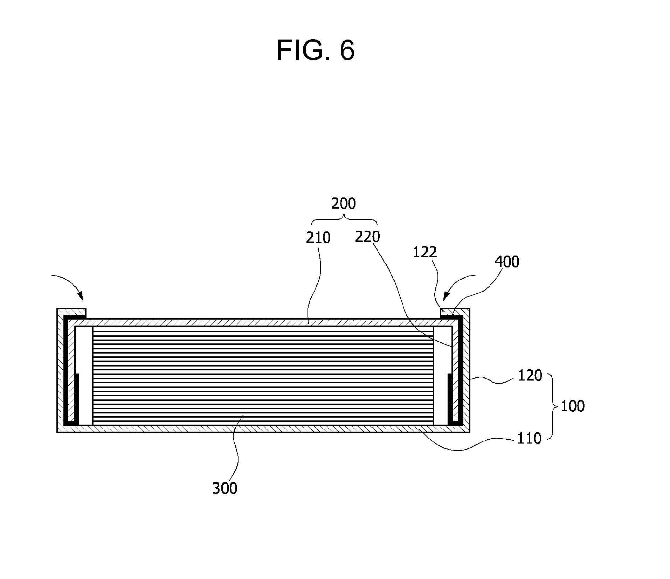

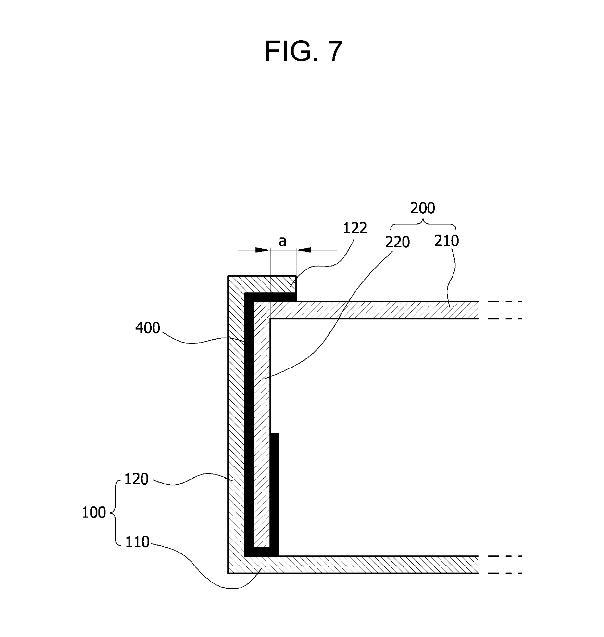

FIG. 3 is an exploded perspective view of a first exemplary embodiment of a case for a secondary battery according to the present invention, FIG. 4 is a perspective view illustrating a shape of an upturned cap included in the first exemplary embodiment of the case for a secondary battery according to the present invention, FIG. 5 and FIG. 6 are cross-sectional views illustrating in sequence a process of combining a can and a cap of the first exemplary embodiment, and FIG. 7 is a partial cross-sectional view illustrating a combination structure of the can and the cap of the first exemplary embodiment.

A case for a secondary battery according to a first exemplary embodiment of the present invention basically includes a can 100 which includes an inner space into which an electrode assembly 300 is inserted and which is filled with an electrolyte solution and a cap 200 configured to seal an inlet of the inner space of the can 100. The can 100 includes a lower plate 110 serving as a bottom and an upward side wall 120 upwardly extended from the lower plate 110 to surround an upper space of the lower plate 110, so that the inner space is open at the top. Further, the cap 200 includes an upper plate 210 having a size and a shape sufficient to cover the upper inner space of the can 100 and a downward side wall 220 downwardly extended from a periphery of the upper plate 210 to surround a lower space of the upper plate 210, so that the inner space is open at the bottom. The space surrounded by the downward side wall 220 is set to be slightly smaller than the space surrounded by the upward side wall 120. Thus, when the cap 200 is combined with the can 100, the downward side wall 220 is overlapped with the upward side wall 120, that is, an outer surface of the downward side wall 220 is brought into close contact with an inner surface of the upward side wall 120.

Further, the can 100 and the cap 200 constituting the case for a secondary battery are typically made of metal. When two different metals are brought into direct contact with each other, the two metals cannot be in completely close contact with each other and may be slightly spaced apart from each other. The case for a secondary battery according to the present invention may further include a gasket 400 which is inserted into a contact portion between the can 100 and the cap 200 so as to seal between the can 100 and the cap 200. Herein, preferably, the gasket 400 may be provided so as to fill a gap between the upward side wall 120 and the downward side wall 220 and also extended so as to fill a gap between the downward side wall 220 and the lower plate 110 as illustrated in FIG. 6 and FIG. 7.

If the downward side wall 220 and the upward side wall 120 are provided so as to be overlapped and the gasket 400 is provided between the downward side wall 220 and the upward side wall 120 as such, even if the inner space is expanded due to an increase in internal pressure of the case for a secondary battery, an electrolyte solution or a gas does not leak between the can 100 and the cap 200 to the outside. However, if the internal pressure of the case is increased, the cap 200 is forced to be upwardly moved, and, thus, the can 100 and the cap 200 may be separated from each other. The case for a secondary battery according to the present invention is characterized by having a structure in which an upper portion of the upward side wall 120 of the can 100 is inwardly bent so as to cover a peripheral portion of the upper plate 210 of the cap 200 in order to solve the above-described problem, that is, in order to prevent the cap 200 from being upwardly slid and separated from the can 100 even if an internal pressure is generated. When the case for a secondary battery according to the present invention is assembled, the electrode assembly 300 is first mounted within the inner space of the can 100, and as illustrated in FIG. 5, the cap 200 is inserted into the can 100 by fitting so as to bring the downward side wall 220 of the cap 200 into close contact with the inner surface of the upward side wall 120 of the can 100. In the meantime, the upward side wall 120 of the can 100 is maintained as being upwardly straightened.

Then, the can 100 may include a reinforced connection unit 122 in which a section of the downward side wall 220 is wrapped with a section of the upward side wall 120 in order to improve a connection force and a sealing property when the can 100 and the cap 200 are connected. The reinforced connection unit 122 according to the present invention may be a bent part which is formed at the upward side wall 120 of the can 100 and of which an upper portion is bent to cover the upper plate in whole or in part (hereinafter, simply referred to as "bent part 122").

When the cap 200 is completely inserted into the can 100, an assembler inwardly bends an upper portion of the upward side wall 120 so as to be brought into close contact with an upper surface of the cap 200 as illustrated in FIG. 6, so that the cap 200 is held by the bent part 122 of the upward side wall 120 so as not to be upwardly separated.

As described above, in the conventional case for a secondary battery illustrated in FIG. 1 and FIG. 2, a force is applied in a direction in which the can 10 and the cap 20 are spaced apart from each other when an internal pressure is increased, so that the can 10 and the cap 20 are separated from each other. However, in the case for a secondary battery according to the present invention, even if a force is applied in a direction in which the upper plate 210 of the cap 200 is spaced apart from the lower plate 110 and the downward side wall 220 of the cap 200 is separated to the outside due to an increase in internal pressure, the upper plate 210 is compressed onto the bent part 122 of the upward side wall 120 and the downward side wall 220 of the cap 200 is compressed onto the upward side wall 120 of the can 100, and, thus, a gap is not generated between the can 100 and the cap 200. If an internal pressure of the case is generated, the upper plate 210 and downward side wall 220 of the cap 200 are further compressed onto the upward side wall 120 of the can 100. Thus, it can be said that a sealing property between the can 100 and the cap 200 is improved.

Meanwhile, if the bent part 122 is formed at the upper part of the upward side wall 120, preferably, the gasket 400 is extended to between a bottom surface of the bent part 122 and an upper surface of the upper plate 210 so as to seal between the bent part 122 and the upper plate 210. The gasket 400 inserted between the bent part 122 and the upper plate 210 as such is further compressed when an internal pressure of the case is increased. Thus, a sealing property between the bottom surface of the bent part 122 and the upper surface of the upper plate 210 can be further improved. Further, preferably, the gasket 400 may be extended to be vertically long so as to fill from between a lower end of the downward side wall 220 and an upper surface of the lower plate 110 to between the bottom surface of the bent part 122 and the upper surface of the upper plate 210. If the gasket 400 is extended as such, a space filled with the gasket 400 is very large, and, thus, it is possible to obtain an effect of improvement in sealing ability.

Further, if the can 100 and the cap 200 are combined by bending the upward side wall 120 of the can 100 so as to cover the upper plate 210 of the cap 200, the flange 12 illustrated in FIG. 1 and FIG. 2 can be omitted. Thus, a product size in a widthwise direction can be reduced as much as a length of the flange 12 while a size of the electrode assembly 300 remains the same. If a secondary battery can be reduced in size as such, it is possible to obtain an effect of reduction in size of various electronic products using the secondary battery.

Meanwhile, when an internal pressure of the case is increased and the upper plate 210 of the cap 200 is upwardly forced, if the bent part 122 of the upward side wall 120 is upwardly straightened, the cap 200 may be upwardly moved and completely separated from the can 100, which may cause an accident. Therefore, in the case for a secondary battery according to the present invention, the bent part 122 may be formed to be longer than the example illustrated in the present exemplary embodiment in order to prevent the cap 200 from being completely separated from the can 100 even if the bent part 122 is somewhat straightened. Further, in the present exemplary embodiment, only the structure in which the bent part 122 covers the peripheral portion of the upper plat 210 has been illustrated, but the bent part 122 may be designed to be larger and configured to cover the entire upper plate 210. On the other hand, if the bent part 122 cannot be straightened even when the internal pressure is increased, only a part of the upper portion of the upward side wall 120 may be bent so as to cover the upper plate 210, that is, the bent part 122 may be designed to be formed only at a part of the upward side wall 120. As the bent part 122 is increased in width and length, a connection force between the can 100 and the cap 200 is improved but a material cost is increased. Therefore, a size and a shape of the bent part 122 may be appropriately designed depending on intensity of the internal pressure and rigidity of materials of the can 100 and the cap 200.

Furthermore, in order to prevent the electrolyte solution and the gas within the case from leaking to the outside, preferably, the lower end of the downward side wall 220 may be compressed onto the upper surface of the lower plate 110. Therefore, preferably, when the upper portion of the upward side wall 120 is bent to be laminated or stacked on the upper surface of the upper plate 210, the upper portion of the upward side wall 120 may apply a downward pressure to the upper plate 210. That is, when the upper portion of the upward side wall 120 is bent to cover the upper plate 210 so as to change a state illustrated in FIG. 5 to a state illustrated in FIG. 6, the bent part 122 may be bent sufficiently to apply a downward pressure to the upper plate 210 as well as to cover the upper plate 210, so that the lower end of the downward side wall 220 can be compressed onto the upper surface of the lower plate 110. If the bent part 122 is bent as such, the bent part 122 can be compressed onto the upper plate 210 and the lower end of the downward side wall 220 can also be compressed onto the lower plate 110. Thus, it is possible to more effectively prevent the electrolyte solution and the gas within the case from leaking to the outside. Herein, if the downward side wall 220 is formed slantly toward one side rather than being vertically formed with respect to the lower plate 110, when the bent part 122 applies a downward pressure to the upper plate 210, the downward side wall 220 falls down toward one side. Therefore, preferably, the downward side wall 220 may be arranged to be perpendicular to the lower plate 110, and the bent part 122 may be configured to apply a pressure to the downward side wall 220 in a direction perpendicular to the lower plate 110.

Meanwhile, if a length of the bent part 122 is short and thus cannot sufficiently cover an upper portion of the downward side wall 220, when the bent part 122 is bent to apply a downward pressure to the upper plate 210, the pressure is applied only to a part of a horizontal section of the downward side wall 220. Thus, the downward side wall 220 may be bent or deformed. Therefore, in the case for a secondary battery according to the present invention, in order to uniformly apply a pressure to the entire downward side wall 220 when the bent part 122 applies a downward pressure to the upper plate 210, preferably, an end of the bent part 122 may be positioned to be closer to a vertical center of the cap 200 than an inner surface of the downward side wall 220, that is, the end of the bent part 122 may be designed to be inwardly extended as much as a length of at least "a" compared with the inner surface of the downward side wall 220 as illustrated in FIG. 7. If the bent part 122 is sufficiently extended as such, when the bent part 122 applies a downward pressure to the upper plate 210, a pressure is uniformly applied to the entire downward side wall 220. Thus, it is possible to prevent the downward side wall 220 from being slanted or bent toward one side.

Further, if the upper portion of the upward side wall 120 is bent in an inward direction (in a direction toward the center of the case), the bent part may be folded, that is, edges of the adjacent bent parts 122 may not be overlapped and laminated or stacked on the upper surface of the upper plate 210, but may be straightened. As such, a portion where a part of the bent part 122 is folded is increased in height and cannot normally perform a function of applying a downward pressure to the upper plate 210. For example, as illustrated in the present exemplary embodiment, if the upward side wall 120 is arranged to form a square, the bent part 122 is not folded double to be horizontally bent at each edge. Therefore, in the case for a secondary battery according to the present invention, a cutting line may be formed at a bent portion of the bent part 122 (an edge portion in the present exemplary embodiment) such that the bent part 122 is not folded double and laminated(or stacked) at the corresponding portion, or the bent portion of the bent part 122 (the edge portion in the present exemplary embodiment) may be notched such that the bent part 122 is not overlapped at the edge portion.

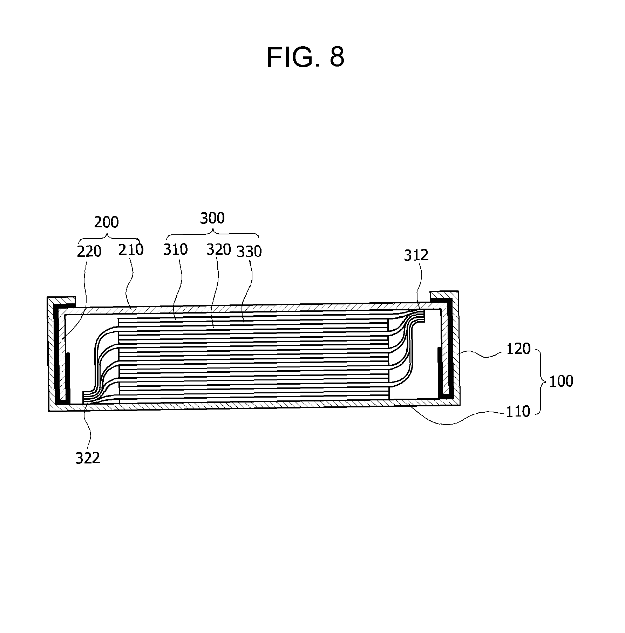

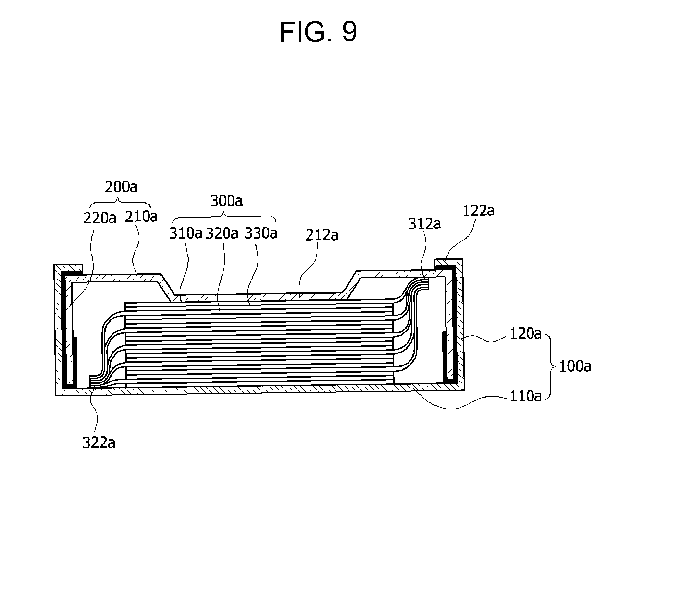

FIG. 8 is a cross-sectional view of a case for a secondary battery according to the present invention illustrating a connection structure of an cathode plate and an anode plate according to the first exemplary embodiment of the case for a secondary battery according to the present invention, and FIG. 9 is a cross-sectional view of a second exemplary embodiment of the case for a secondary battery according to the present invention.

Generally, the electrode assembly 300 for a secondary battery may be configured such that cathode plates 310 and anode plates 320 are alternately laminated or stacked and separators 330 are respectively inserted between the cathode plates 310 and the anode plates 320, and cathode terminals 312 formed at the respective cathode plates 310 are combined into one and grounded to the cap 200 and anode terminals 322 formed at the respective anode plates 320 are combined into one and grounded to the can 100, as illustrated in FIG. 8. Thus, the cap 200 serves as a cathode terminal and the can 100 serves as an anode terminal.

In this case, if not only the cathode terminal 312 but also the uppermost cathode plate 310 is brought into contact with the cap 200, it is possible to obtain an effect of improvement in conductivity between the cathode plate 310 and the cap 200. However, if a length of the downward side wall 220 is greater than a thickness of the electrode assembly 300, when the cap 200 is combined with the can 100, an upper surface of the electrode assembly 300 is not brought into contact with a bottom surface of the upper plate 210, whereas if a length of the downward side wall 220 is too smaller than a thickness of the electrode assembly 300, the lower end of the downward side wall 220 is not brought into contact with the lower plate 110. Therefore, preferably, a thickness of the electrode assembly 300 needs to be exactly matched with a length of the downward side wall 220. In this case, there may be a slight difference in thickness of the electrode assembly 300 when the multiple cathode plates 310, anode plates 320, and separators 330 are laminated or stacked, and, thus, it is difficult to exactly match a thickness of the electrode assembly 300 with a length of the downward side wall 220.

Therefore, in the case for a secondary battery according to a second exemplary embodiment of the present invention, an upper plate 210a may include a dent portion 212a at a position corresponding to an electrode assembly 300a, so that an end of a downward side wall 220a can be brought into close contact with a lower plate 110a and an upper surface of the electrode assembly 300a can also be brought into contact with the upper plate 210a at the same time even if there is a slight difference between a thickness of the electrode assembly 300a and a length of the downward side wall 220a. Herein, the dent portion 212a is not additionally combined with the upper plate 210a but is formed by embossing the upper plate 210a. Thus, when a bent part 122a applies a downward pressure to the upper plate 210a, the dent portion 212a can be elastically deformed so as to be flattened after a contact with the electrode assembly 300a. Therefore, the upper plate 210a can be additionally lowered even after the dent portion 212a is in contact with the electrode assembly 300a. Thus, a lower end of the downward side wall 220a can be compressed onto an upper surface of the lower plate 110a.

If a cap 200a is formed into a thick metal plate, it is difficult for the dent portion 212a to be elastically deformed. Thus, the dent portion 212a formed at the upper plate 210a cannot greatly contribute to bringing the end of the downward side wall 220a into close contact with the lower plate 110a and bringing the upper surface of the electrode assembly 300a into contact with the upper plate 210a at the same time. However, a can 100a and the cap 200a constituting the case for a secondary battery are typically formed into thin metal plates. Therefore, if the can 100a and the cap 200a are embossed so as to be protruded to one side as illustrated in FIG. 9, they can be elastically deformed and restored.

Herein, if a side wall of the dent portion 212a is provided in an upright position, when a downward pressure is applied to the upper plate 210a, the dent portion 212a cannot be easily deformed. Thus, preferably, the side wall of the dent portion 212a may be formed slantly. Even if the side wall of the dent portion 212a is formed slantly in a direction away from, that is, in a direction to be separated from, a vertical center line of the dent portion 212a toward the bottom, it may be easy for the dent portion 212a to be elastically deformed with ease. However, in this case, the dent portion 212a cannot be processed by way of a simple punching process. Therefore, preferably, the dent portion 212a may be formed slantly in a direction closer to the vertical center line of the dent portion 212a toward the bottom as illustrated in the present exemplary embodiment.

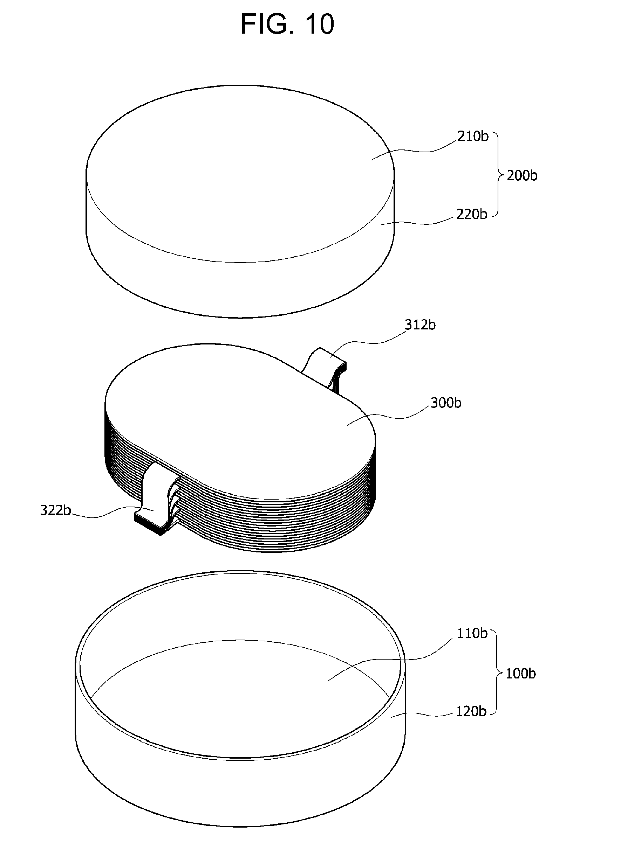

FIG. 10 is an exploded perspective view of a third exemplary embodiment of the case for a secondary battery according to the present invention.

In FIG. 3 to FIG. 9, only the example where the case for a secondary battery according to the present invention has a square-shaped plane has been described, but the case for a secondary battery according to the present invention may have a plane surface formed into a circular shape, that is, a coin shape or a button shape, as illustrated in FIG. 10, and may have planes of various shapes.

If the case for a secondary battery according to the present invention is manufactured into a coin shape or a button shape, when an upper portion of the upward side wall 120b is inwardly bent and applies a downward pressure to the upper plate 210b, the entire periphery of the upper plate 210b has the uniform connection force and sealing property. Thus, preferably, the case for a secondary battery according to the present invention may be applied to a coin-shaped or button-shaped lithium ion secondary battery. The case for a secondary battery according to the present invention can be applied to secondary batteries of various shapes but is not limited to the coin-shaped or button-shaped lithium ion secondary battery.

Meanwhile, even if the case for a secondary battery according to the present invention is manufactured into a coin shape or a button shape, the structure in which the upper portion of the upward side wall 120b is inwardly bent and applies a downward pressure to the upper plate 210b as described in the first exemplary embodiment and the resultant effect are substantially the same as those of the exemplary embodiment illustrated in FIG. 3 to FIG. 9, and, thus, detailed description thereof will be omitted.

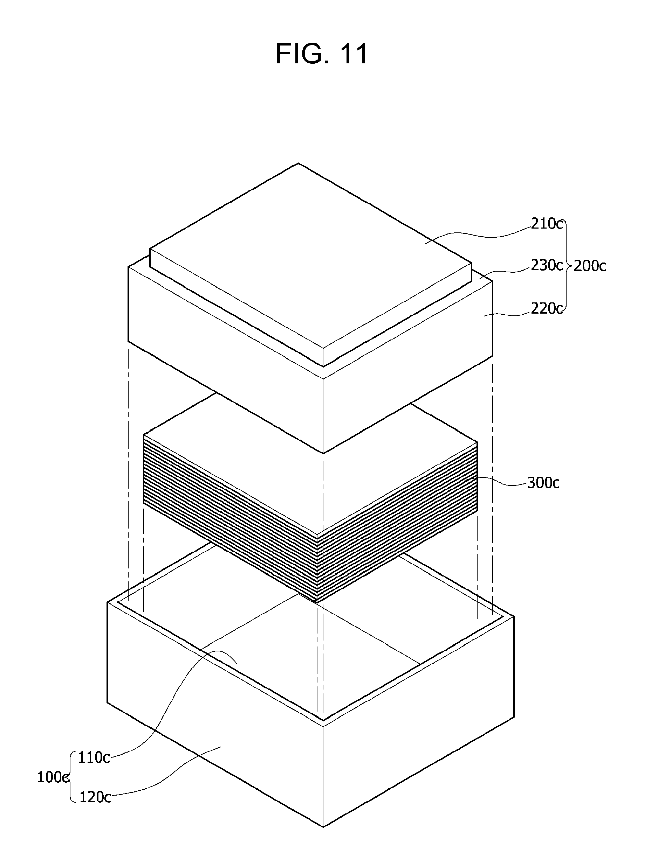

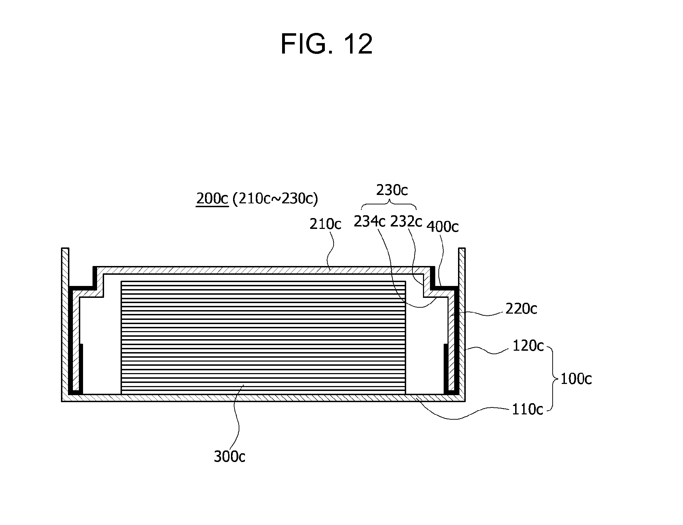

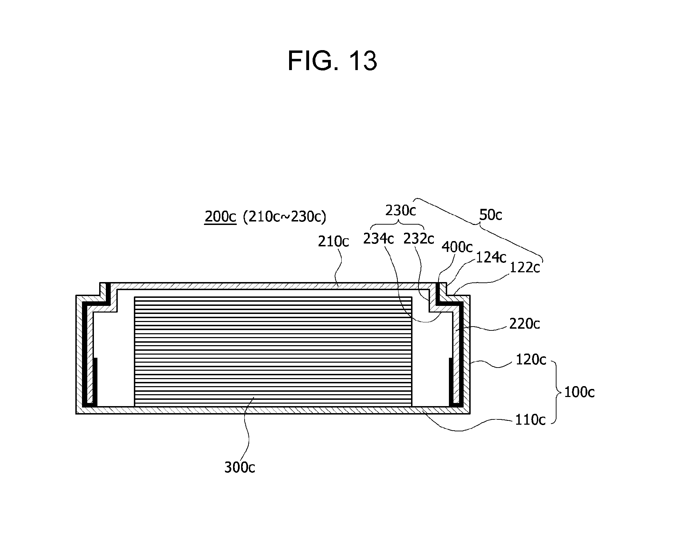

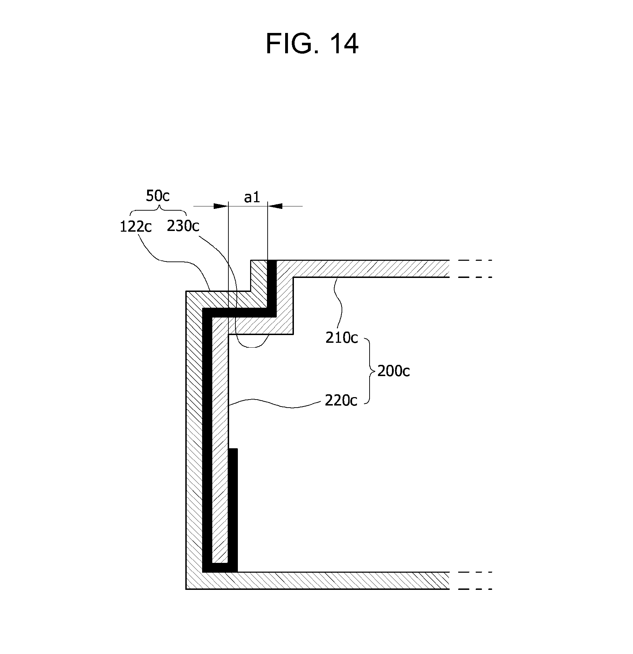

FIG. 11 is an exploded perspective view of a fourth exemplary embodiment of the case for a secondary battery according to the present invention, FIG. 12 and FIG. 13 are cross-sectional views illustrating in sequence a process of combining a can and a cap of the fourth exemplary embodiment, and FIG. 14 is a partial cross-sectional view illustrating a combination structure of the can and the cap of the fourth exemplary embodiment.

The case for a secondary battery according to a fourth exemplary embodiment of the present invention includes a can 100c including an inner space into which an electrode assembly 300c is inserted and which is filled with an electrolyte solution and a cap 200c configured to cover and seal an inlet of the innser space of the can 100c so as to prevent the electrolyte solution or a gas generated therein from leaking to the outside like a general case for a secondary battery. The can 100c includes a lower plate 110c serving as a bottom and an upward side wall 120c upwardly extended from the lower plate 110c to surround an upper space of the lower plate 110c, so that the inner space is open at the top. Further, the cap 200c includes an upper plate 210c having a size and a shape sufficient to cover the inner space of the can 100c and a downward side wall 220c downwardly extended from a periphery of the upper plate 210c to surround a lower space of the upper plate 210c, so that the inner space is open at the bottom.

The space surrounded by the downward side wall 220c is set to be slightly smaller than the space surrounded by the upward side wall 120c. Thus, as the cap 200c is inserted into the can 100c, the downward side wall 220c is overlapped with the upward side wall 120c and the electrode assembly 300c and the electrolyte solution are positioned within the inner space of the cap 200c. In this case, in order to prevent leakage of a gas generated from a chemical reaction between the electrolyte solution filling the inside of the cap 200c and the electrode assembly 300c to the outside through a gap between the downward side wall 220c and the upward side wall 120c, an outer surface of the downward side wall 220c is brought into close contact with an inner surface of the upward side wall 120c when the can 100c and the cap 200c are combined.

Meanwhile, the can 100c and the cap 200c constituting the case for a secondary battery are typically made of metal. When two different metals are brought into direct contact with each other, the two metals cannot be in completely close contact with each other and a small gap may be easily formed therebetween. The case for a secondary battery according to the present invention may further include a gasket 400c which is inserted into a contact portion between the can 100c and the cap 200c, that is, between the upward side wall 120c and the downward side wall 220c and between the downward side wall 220c and the lower plate 110c, so as to seal between the can 100c and the cap 200c.

If the downward side wall 220c and the upward side wall 120c are provided so as to be overlapped and the gasket 400c is provided between the downward side wall 220c and the upward side wall 120c as such, even if the inner space is expanded due to an increase in internal pressure of the case for a secondary battery, an electrolyte solution or a gas does not leak between the can 100c and the cap 200c to the outside. However, if the internal pressure of the case is increased, the cap 200c is forced to be upwardly slid, and, thus, the can 100c and the cap 200c may be separated from each other.

Thus, referring to FIG. 13, in the case for a secondary battery according to the fourth exemplary embodiment of the present invention, to solve the above-described problem, the can 100c may include a reinforced connection unit 50c in which a section of the downward side wall 220c is wrapped with a section of the upward side wall 120c in order to improve a connection force and a sealing property when the can 100c and the cap 200c are connected. The reinforced connection unit 50c may include a connection sill 230c which is formed at the downward side wall 220c of the cap 200c and extended to the outside and then downwardly extended and a bent part 122c which is formed at the upward side wall 120c of the can 100c and bent so as to be mounted on an upper surface of the connection sill 230c.

That is, the case for a secondary battery according to the present invention has a structure in which an upper portion of the upward side wall 120c of the can 100c is inwardly bent so as to be held by the cap 200c in order to prevent the cap 200c from being upwardly slid and separated from the can 100c even if an internal pressure is generated. In the conventional case for a secondary battery (refer to FIG. 1 and FIG. 2), a force is applied in a direction in which the can 10 and the cap 20 are spaced apart from each other when an internal pressure is increased, so that the can 10 and the cap 20 are separated from each other. However, in the case for a secondary battery according to the present invention, even if a force is applied in a direction in which the upper plate 210c of the cap 200c is spaced apart from the lower plate 110c and the downward side wall 220c of the cap 200c is separated to the outside due to an increase in internal pressure, the cap 200c is held by the bent part of the upward side wall 120c (hereinafter, simply referred to "bent part 122c) and cannot be upwardly raised and the downward side wall 220c of the cap 200c is compressed onto the upward side wall 120c of the can 100c. Thus, a gap is not generated between the can 100c and the cap 200c. If the internal pressure is increased, the cap 200c is further compressed onto the bent part 122c and the upward side wall 120c. Thus, it can be said that a sealing property between the can 100c and the cap 200c is improved.

Herein, if the bent part 122c of the upward side wall 120c is configured to be mounted on an upper surface of the cap 210c, the bent part 122c is protruded to be higher than the upper surface of the cap 210c. Therefore, a larger space for mounting a secondary battery is needed. Further, if a high voltage and a high current are required, multiple secondary batteries are laminated or stacked and then electrically connected. If the bent part 122c is upwardly protruded from the upper surface of the cap 210c, the secondary batteries cannot be stably laminated or stacked and may be shaken, and a shock may be applied to the bent part 122c during a process of stacking the secondary batteries, which may cause damage to the bent part 122c. Therefore, the case for a secondary battery according to the present invention is characterized in that the connection sill 230c which formed at the downward side wall 220c is extended in a protruded direction to the outside and then downwardly extended and the bent part 122c is configured so as to be mounted on the upper surface of the connection sill 230c. If the bent part 122c is configured to be brought into close contact with the connection sill 230c formed at the downward side wall 220c rather than being brought into close contact with an upper surface of the upper plate 210c, the bent part 122c is not protruded to be higher than the upper surface of the upper plate 210c. Thus, it is possible to stably laminate or stack multiple secondary batteries and also possible to prevent damage to the bent part 122c.

Therefore, when the case for a secondary battery according to the present invention is assembled, the electrode assembly 300c is first mounted within the inner space of the can 100c, and as illustrated in FIG. 12, the cap 200c is inserted into the can 100c by fitting so as to bring the downward side wall 220c of the cap 200c into close contact with the inner surface of the upward side wall 120c of the can 100c. In the meantime, the upward side wall 120c of the can 100c is maintained as being upwardly straightened. When the cap 200c is completely inserted into the can 100c, the assembler inwardly bends the upper portion of the upward side wall 120c so as to be brought into close contact with an upper surface of the connection sill 230c as illustrated in FIG. 13, so that the cap 200c is held by the bent part 122 so as not to be upwardly separated. In this case, if the connection sill 230c is formed at a middle end of the downward side wall 220c as illustrated in FIG. 13, an extension portion 124c which is upwardly extended from an end of the bent part 122c and brought into close contact with the downward side wall 220c (more clearly, a portion of the downward side wall 220c higher than the connection sill 230c) may be included in order for the upper plate 210c not to be shaken to one side.

Further, if the can 100c and the cap 200c are combined by bending the bent part 122c of the upward side wall 120c so as to cover the upper surface of the connection sill 230c, the flange 12 illustrated in FIG. 1 and FIG. 2 can be omitted. Thus, a product size in a widthwise direction can be reduced as much as a length of the flange 12 while a size of the electrode assembly 300c remains the same. If a secondary battery can be reduced in size as such, it is possible to obtain an effect of reduction in size of various electronic products including the secondary battery.

Furthermore, in order to prevent the electrolyte solution and the gas within the case from leaking to the outside, preferably, the lower end of the downward side wall 220c may be compressed onto the upper surface of the lower plate 110c. Therefore, preferably, when the bent part 122c is bent to be laminated or stacked on the upper surface of the connection sill 230c, the bent part 122c may apply a downward pressure to the downward side wall 220c. That is, when the bent part 122c is bent so as to change a state illustrated in FIG. 12 to a state illustrated in FIG. 13, the bent part 122c may be bent sufficiently to apply a downward pressure to the connection sill 230c as well as to cover the connection sill 230c, so that the lower end of the downward side wall 220c can be compressed onto the upper surface of the lower plate 110c. If the bent part 122c is bent as such, the bent part 122c can be compressed onto the connection sill 230c and the lower end of the downward side wall 220c can also be compressed onto the lower plate 110c. Thus, it is possible to more effectively prevent the electrolyte solution and the gas within the case from leaking to the outside. Herein, if the downward side wall 220c positioned under the connection sill 230c is formed slantly toward one side rather than being vertically formed with respect to the lower plate 110c, when the bent part 122c applies a downward pressure to the connection sill 230c, the downward side wall 220c falls down toward one side. Therefore, preferably, the downward side wall 220c positioned under the connection sill 230c may be arranged to be perpendicular to the lower plate 110c, and the bent part 122c may be configured to apply a pressure to the downward side wall 220c in a direction perpendicular to the lower plate 110c.

Meanwhile, if a length of the bent part 122c is short and thus cannot sufficiently cover the upper surface of the connection sill 230c, when the bent part 122c is bent to apply a downward pressure to the connection sill 230c, the pressure is applied only to a part of a horizontal section of the downward side wall 220c (more clearly, only to a portion positioned vertically under the bent part 122c). Thus, the downward side wall 220c may be bent or deformed. Therefore, in the case for a secondary battery according to the present invention, in order to uniformly apply a pressure to the entire downward side wall 220c when the bent part 122c applies a downward pressure to the connection sill 230c, preferably, the end of the bent part 122c may be positioned to be closer to a vertical center of the cap 200c than an inner surface of the downward side wall 220c down under the connection sill 230c, that is, the end of the bent part 122c may be designed to be inwardly extended as much as a length of at least "a1" compared with the inner surface of the downward side wall 220c as illustrated in FIG. 14. If the bent part 122c is sufficiently extended as such, when the bent part 122c applies a downward pressure to the connection sill 230c, a pressure is uniformly applied to the entire downward side wall 220c. Thus, it is possible to prevent the downward side wall 220c from being slanted or bent toward one side.

Further, in the present exemplary embodiment, only the example where one connection sill 230c is formed at the downward side wall 220c and one bent part 122c is formed at the upward side wall 120c has been described, but the case for a secondary battery according to the present invention may be manufactured such that two or more connection sills 230c and two or more bent parts 122c may be formed at the downward side wall 220c and the upward side wall 120c, respectively, that is, two or more connection sills 230c and two or more bent parts 122c are vertically arranged, and, thus, the downward side wall 220c and the upward side wall 120c are bent into multiple layers. If the case for a secondary battery according to the present invention may be manufactured to have a structure in which the downward side wall 220c and the upward side wall 120c are bent into multiple layers, when the upward side wall 120c is bent to apply a downward pressure to the downward side wall 220c, the pressure is distributed and applied to the two or more connection sills 230c, thereby more stably applying the pressure. The number of the connection sills 230c and the bent parts 122c can be freely modified depending on a characteristic of the case for a secondary battery.

Furthermore, if the upper portion of the upward side wall 120c is bent in an inward direction (in a direction toward the center of the case), the bent part may be folded, that is, edges of the adjacent bent parts 122c may not be overlapped and laminated or stacked on the upper surface of the connection sill 230c, but may be straightened. As such, a portion where a part of the bent part 122 is folded is increased in height and cannot normally perform a function of applying a downward pressure to the connection sill 230c. For example, as illustrated in the present exemplary embodiment, if the connection sill 230c is arranged to form a square, the bent part 122c is not folded double to be horizontally bent at each edge. Therefore, in the case for a secondary battery according to the present invention, a cutting line may be formed at a bent portion of the bent part 122c (an edge portion in the present exemplary embodiment) such that the bent part 122c is not folded double and laminated or stacked at the corresponding portion, or the bent portion of the bent part 122c (the edge portion in the present exemplary embodiment) may be notched such that the bent part 122c is not overlapped at the edge portion.

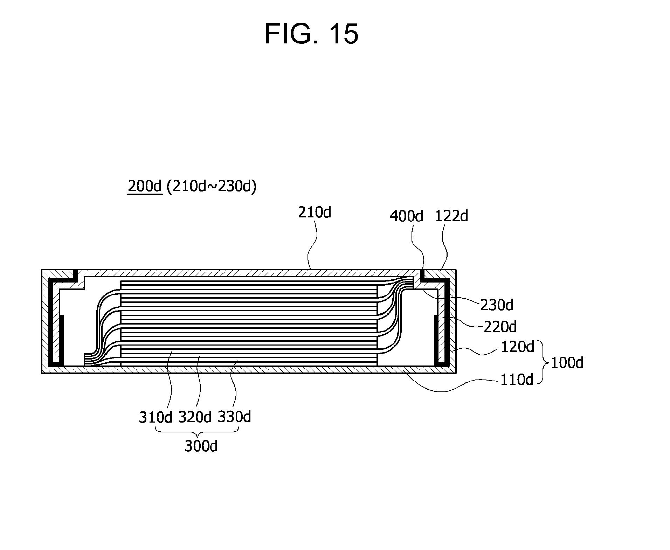

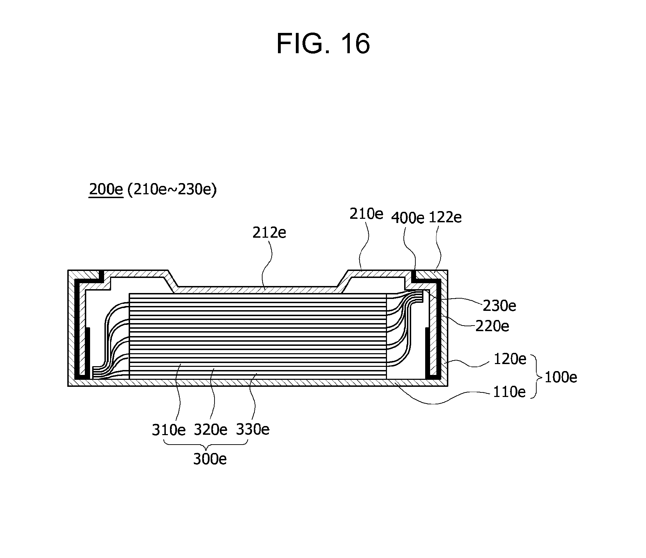

FIG. 15 is a cross-sectional view of a fifth exemplary embodiment of the case for a secondary battery according to the present invention, and FIG. 16 is a cross-sectional view of a sixth exemplary embodiment of the case for a secondary battery according to the present invention.

In the case for a secondary battery according to a fifth exemplary embodiment of the present invention, even if the extension portion 124c (refer to FIG. 13) is not formed at an upper portion of the upward side wall 120d but only a bent part 122d is formed, an upper plate 210d can be stably fixed without being shaken to one side. That is, the bent part 122d is formed at an upper end of the upward side wall 120d and a connection sill 230d is formed at a position lower than the upper plate 210d by a distance equivalent to the total thickness of the bent part 122d and a gasket 400d. Thus, when the bent part 122d is mounted on an upper surface of the connection sill 230d, an upper surface of the bent part 122d may be matched with an upper surface of the upper plate 210d.

If the an upper surface of the bent part 122d is matched with the upper surface of the upper plate 210d, that is, the upper surface of the bent part 122d and the upper surface of the upper plate 210d form a plane surface, when multiple secondary batteries are laminated or stacked, the bent part 122d may not be damaged. Further, since an end of the bent part 122d supports an outer end of the upper plate 210d, the upper plate 210d is not shaken to one side. Furthermore, if the upper surface of the bent part 122d and the upper surface of the upper plate 210d form a plane surface, when two secondary batteries are vertically laminated or stacked, the upper secondary battery applies a downward pressure to the bent part 122d of the lower secondary battery from its weight. Thus, when an internal pressure of the lower secondary battery is increased and an external force is upwardly applied to the bent part 122d, the possibility of straightening the bent part 122d is reduced. Herein, if the upper surface of the bent part 122d and the upper surface of the upper plate 210d are designed to have the same height, the upper surface of the bent part 122d can be higher than the upper surface of the upper plate 210d due to a manufacturing tolerance and an assembly tolerance of each component. Thus, the upper surface of the bent part 122d may be set to be slightly lower than the upper surface of the upper plate 210d.

Further, if two or more pairs of the connection sill 230d and the bent part 122d are formed at the downward side wall 220d and the upward side wall 120d, one of the pairs of the connection sill 230d and the bent part 122d may be formed at middle ends of the downward side wall 220c and the upward side wall 120c as illustrated in FIG. 11 to FIG. 14, and another one of the pairs of the connection sill 230d and the bent part 122d may be formed at upper ends of the downward side wall 220d and the upward side wall 120d as illustrated in FIG. 15. If the connection sills 230d and the bent parts 122d are formed as such, it is possible to more uniformly distribute a connection force between a can 100d and a cap 200d and also possible to stably laminate or stack multiple secondary batteries.

Meanwhile, generally, the electrode assembly 300d for a secondary battery may be configured such that cathode plates 310d and anode plates 320d are alternately laminated or stacked and separators 330d are respectively inserted between the cathode plates 310d and the anode plates 320d, and cathode terminals 312d formed at the respective cathode plates 310d are combined into one and grounded to the cap 200d and anode terminals 322d formed at the respective anode plates 320d are combined into one and grounded to the can 100d, as illustrated in FIG. 15. Thus, the cap 200d serves as a cathode terminal and the can 100d serves as an anode terminal.

In this case, if not only the cathode terminal 312d but also the uppermost cathode plate 310d is brought into contact with the cap 200d, it is possible to obtain an effect of improvement in conductivity between the cathode plate 310d and the cap 200d. However, if a length of the downward side wall 220d is greater than a thickness of the electrode assembly 300d, when the cap 200d is combined with the can 100d, an upper surface of the electrode assembly 300d is not brought into contact with a bottom surface of the upper plate 210d, whereas if a length of the downward side wall 220d is too smaller than a thickness of the electrode assembly 300d, the lower end of the downward side wall 220d is not brought into contact with the lower plate 110d. Therefore, preferably, a thickness of the electrode assembly 300d needs to be exactly matched with a length of the downward side wall 220d.

In this case, there may be a slight difference in thickness of the electrode assembly 300d when the multiple cathode plates 310d, anode plates 320d, and separators 330d are laminated or stacked, and, thus, it is difficult to exactly match a thickness of the electrode assembly 300d with a length of the downward side wall 220d.

Therefore, in the case for a secondary battery according to a sixth exemplary embodiment of the present invention, as illustrated in FIG. 16, an upper plate 210e may include a dent portion 212e at a position corresponding to an electrode assembly 300e, so that an end of a downward side wall 220e can be brought into close contact with a lower plate 110e and an upper surface of the electrode assembly 300e can also be brought into contact with the upper plate 210e at the same time even if there is a slight difference between a thickness of the electrode assembly 300e and a length of the downward side wall 220e. Herein, the dent portion 212e is not additionally combined with the upper plate 210e but is formed by embossing the upper plate 210e. Thus, when a bent part 122e applies a downward pressure to the upper plate 210e, the dent portion 212e can be elastically deformed so as to be flattened after a contact with the electrode assembly 300e. Therefore, the upper plate 210e can be additionally lowered even after the dent portion 212e is in contact with the electrode assembly 300e. Thus, a lower end of the downward side wall 220e can be compressed onto an upper surface of the lower plate 110e.

If a cap 200e is formed into a thick metal plate, it is difficult for the dent portion 212e to be elastically deformed. Thus, the dent portion 212e formed at the upper plate 210e cannot greatly contribute to bringing the end of the downward side wall 220e into close contact with the lower plate 110e and bringing the upper surface of the electrode assembly 300e into contact with the upper plate 210e at the same time. However, a can 100e and the cap 200e constituting the case for a secondary battery are typically formed into thin metal plates. Therefore, if the can 100e and the cap 200e are embossed so as to be protruded to one side as illustrated in FIG. 16, they can be elastically deformed and restored.

Herein, if a side wall of the dent portion 212e is provided in an upright position, when a downward pressure is applied to the upper plate 210e, the dent portion 212e cannot be easily deformed. Thus, preferably, the side wall of the dent portion 212e may be formed slantly. Even if the side wall of the dent portion 212e is formed slantly in a direction away from, that is, in a direction to be separated from, a vertical center line of the dent portion 212e toward the bottom, it may be easy for the dent portion 212e to be elastically deformed with ease. However, in this case, the dent portion 212e cannot be processed by way of a simple punching process. Therefore, preferably, the dent portion 212e may be formed slantly in a direction closer to the vertical center line of the dent portion 212e toward the bottom as illustrated in the present exemplary embodiment.

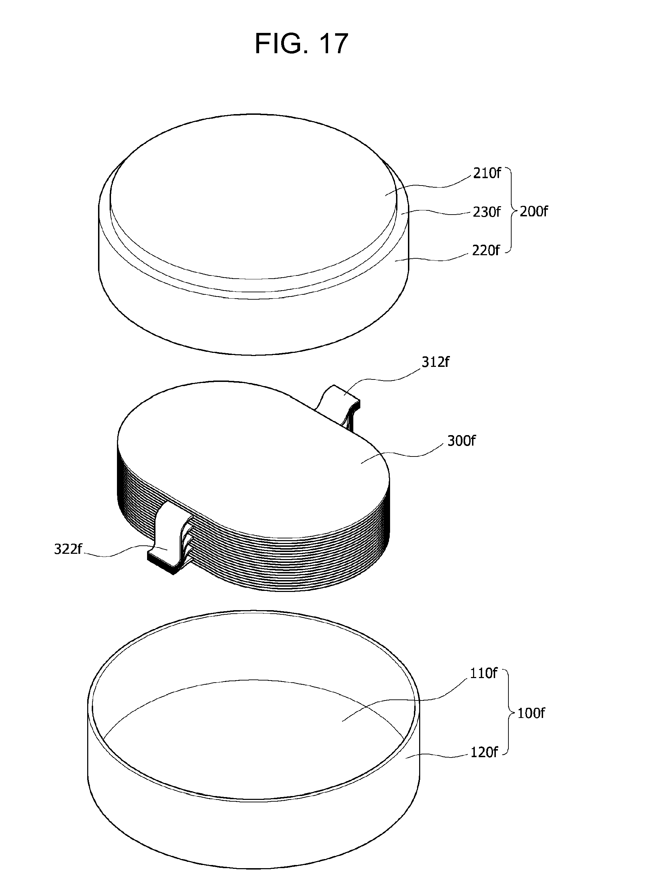

FIG. 17 is an exploded perspective view of a seventh exemplary embodiment of the case for a secondary battery according to the present invention.

In FIG. 11 to FIG. 16, only the example where the case for a secondary battery according to the present invention has a square-shaped plane has been described, but the case for a secondary battery according to the present invention may have a plane surface formed into a circular shape, that is, a coin shape or a button shape, as illustrated in FIG. 17. If the case for a secondary battery according to the present invention is manufactured into a coin shape or a button shape, all of the sections between the can and the cap have the uniform connection force and sealing property. Thus, preferably, the case for a secondary battery according to the present invention may be applied to a coin-shaped or button-shaped lithium ion secondary battery. The case for a secondary battery according to the present invention can be applied to secondary batteries of various shapes but is not limited to the coin-shaped or button-shaped lithium ion secondary battery.

Meanwhile, even if the case for a secondary battery according to the present invention is manufactured into a coin shape or a button shape, a connection sill 230f may be formed at a downward side wall 220f and a bent part (not illustrated) formed at an upward side wall 120f may be mounted on the connection sill 230f to apply a downward pressure to the connection sill 230f. Further, even if a can 100f and a cap 200f are formed into a coin shape or a button shape, the structure in which the can 100f and the cap 200f are combined by mounting the bent part 122f on the connection sill 230f and the resultant effect are substantially the same as those of the exemplary embodiment illustrated in FIG. 11 to FIG. 16, and, thus, detailed description thereof will be omitted.

The exemplary embodiments of the present invention have been described in detail, but the scope of the present invenition is not limited to the specifi exemplary embodiemnts and should be construed based on the appended claims. Further, it should be undertood by those skilled in the art that various modifications and changes can be made wihtout departing from the scope of the present invention.

## Claims

1. A case for a secondary battery comprising:
a can which includes a lower plate and an upward side wall extended upwardly from the lower plate so as to form an inner space with an open top; and
a cap which includes an upper plate and a downward side wall extended downwardly from the upper plate so as to form an inner space with an open bottom, and isolates the inner space of the can from the outside by inserting a lower end of the downward side wall into the inner space of the can so as to be mounted on an upper surface of the lower plate,
wherein a reinforced connection unit in which a section of the downward side wall is wrapped with a section of the upward side wall is included in order to improve a connection force and a sealing property when the can and the cap are connected.

2. The case for a secondary battery of claim 1, wherein the reinforced connection unit is a bent part which is formed at the upward side wall and of which an upper portion is bent to cover the upper plate in whole or in part.

3. The case for a secondary battery of claim 2, wherein the bent part applies a downward pressure to the upper plate so as to compress the lower end of the downward side wall onto the lower plate.

4. The case for a secondary battery of claim 3, wherein an end of the bent part in a longitudinal direction is positioned to be closer to a vertical center of the cap than an inner surface of the downward side wall.

5. The case for a secondary battery of claim 2, wherein the upper plate includes a dent portion which is downwardly dented and applies a downward pressure to the electrode assembly when the bent part applies a downward pressure to the upper plate.

6. The case for a secondary battery of claim 5, wherein a side wall of the dent portion is formed slantly in a direction closer to a vertical center line of the dent portion toward the bottom.

7. The case for a secondary battery of any one of claim 2 to claim 6, further comprising:
a gasket which is inserted into a portion where the can and the cap are overlapped with each other so as to seal between the can and the cap.

8. The case for a secondary battery of claim 7, wherein the gasket is prepared from between the lower end of the downward side wall and the upper surface of the lower plate to between a bottom surface of the bent part and an upper surface of the upper plate.

9. The case for a secondary battery of any one of claim 2 to claim 6, wherein the downward side wall is arranged to be perpendicular to the lower plate, and the bent part is configured to apply a pressure to the downward side wall in a direction perpendicular to the lower plate.

10. The case for a secondary battery of claim 1, wherein the reinforced connection unit includes a connection sill which is formed at the downward side wall of the cap and extended to the outside and then downwardly extended and a bent part which is formed at the upward side wall of the can and bent so as to be mounted on an upper surface of the connection sill.

11. The case for a secondary battery of claim 10, wherein the connection sill is formed at a middle end of the downward side wall, and the upward side wall further includes an extension portion which is upwardly extended from an end of the bent part and brought into close contact with the downward side wall.

12. The case for a secondary battery of claim 10, wherein the bent part is formed at an upper end of the upper side wall, and a height of a peak of the bent part mounted on the upper surface of the connection sill is equal to or lower than a height of an upper surface of the upper plate.

13. The case for a secondary battery of claim 12, wherein an upper surface of the bent part and the upper surface of the upper plate form a plane surface.

14. The case for a secondary battery of any one of claim 10 to claim 13, wherein the downward side wall includes two or more connection sills in a vertical direction, and the upward side wall includes two or more bent parts in a vertical direction, so that different bent parts are respectively mounted on the two or more connection sills.

15. The case for a secondary battery of any one of claim 10 to claim 13, wherein the bent part is bent so as to apply a downward pressure to the connection sill, so that the lower end of the downward side wall is compressed onto the lower plate.

16. The case for a secondary battery of any one of claim 10 to claim 13, wherein the end of the bent part is positioned to be closer to a vertical center of the cap than an inner surface of the downward side wall positioned under the connection sill.

17. The case for a secondary battery of any one of claim 10 to claim 13, wherein the upper plate includes a dent portion which is downwardly dented and applies a downward pressure to the electrode assembly when a downward pressure is applied to the upper plate by bending of the upward side wall.

18. The case for a secondary battery of claim 17, wherein a side wall of the dent portion is formed slantly in a direction closer to a vertical center line of the dent portion toward the bottom.

19. The case for a secondary battery of any one of claim 10 to claim 13, further comprising:
a gasket which is inserted between the upward side wall and the downward side wall and between the downward side wall and the lower plate so as to seal between the can and the cap.
